# EUROPEAN PATENT APPLICATION

(11) **EP 1 254 734 A1**
(43) Date of publication of application: **06.11.2002**
(21) Application number: 02253045.5
(22) Date of filing: 30.04.2002
(51) Int. Cl.: B23K 3/06, B23K 3/08, B23K 1/08, B23K 1/20, C22B 7/04, H05K 3/34

(54) **Solder dross removal apparatus**

(30) Priority: 02.05.2001 JP 2001135087
(71) Applicant: SENJU METAL INDUSTRY CO., LTD., Tokyo (JP)
(72) Inventor: Ogawa, Tadamichi, c/o Senju Metal Industry Co.,Ltd, Adachi-ku, Tokyo (JP)
(74) Representative: Makovski, Priscilla Mary

(57) **Abstract**

A solder dross removal apparatus (10) for keeping molten solder (18) in a wave soldering machine substantially free of dross (42) or tin and lead oxides which are formed on the surface of the molten solder (18) where it is in contact with atmospheric air. The solder dross removal apparatus (10) includes a container (12) adapted to hold a pool of molten solder (18) at a preset temperature and receive dross (42) from the wave soldering machine. A refractory lid (20) is detachably mounted on the open top of the container (12). An agitator (26) is rotatably supported by the lid (20) and located within the container (12) to agitate the molten solder (18) and the dross (42). The lid (20) includes an opening (38) through which a separating agent in powder form is introduced into the container (12) to facilitate separation of oxides.

## Description

The present invention relates to an apparatus for removing dross present on the surface of molten solder in a wave soldering machine and reclaiming solder from the dross.

A wave soldering machine is designed to automatically solder electronic components to a printed circuit board. Typically, the wave soldering machine includes a solder reservoir within which a supply of molten solder is kept at a preset temperature. At least one solder wave nozzle is arranged in the solder reservoir, and a pump is associated with the solder wave nozzle to pump the molten solder upwardly through the solder wave nozzle to produce a solder wave. The printed circuit board is passed over the top of the solder wave to skim its surface. During this passage, conductive solder joints are formed between the components and the printed circuit board.

A problem associated with such a wave soldering machine is that dross, typically the oxides of tin and lead, is always generated wherever the molten solder is exposed to atmospheric air. Dross generation adds considerably to the cost of the wave soldering process due to the lost value of the solder and the maintenance it imposes.

Various attempts have been made to remove dross and reclaim solder from the dross. For example, United States Patent No. 6,235,208 teaches the use of a separating agent such as rice bran adapted to facilitate removal of dross or tin and lead oxides. A netted container is partly dipped into a pool of molten solder held in a solder reservoir. Dross present on the surface of the molten solder is transported from the solder reservoir to the netted container. A spoon is employed to spread a suitable separating agent over the dross. The netted container is repeatedly dipped into and lifted up from the pool of molten solder. As a result of this procedure, tin and lead oxides are left in the container while reclaimed solder is returned to the solder reservoir. However, up to 50% of the solder can be lost with the oxides. Another disadvantage is that vertical movement of the container may cause the hot molten solder to splash around the operator. Also, the operator is likely to inhale smoke which is generated as a result of burning of the separating agent.

Accordingly, it is an object of the present invention to provide a solder dross removal apparatus which can safely and efficiently remove oxides and reclaim solder from the dross.

According to one aspect of the present invention, there is provided a solder dross removal apparatus which comprises a container for holding a pool of molten solder at a preset temperature, a refractory lid detachably mounted on the open top of the container, and an agitator rotatably supported by the lid and located within the container. The lid is shaped to substantially cover the open top of the lid. The lid is formed with an opening through which a separating agent in powder form is introduced into the container. This arrangement allows safe introduction of the separating agent into the container. The combined use of the separating agent and the agitator promotes separation of tin and lead oxides or dross.

In a preferred embodiment, the lid is made of stainless steel. Alternatively, the lid may be made of a heat-resistant transparent glass to enable the operator to inspect dross removal. Preferably, the lid includes a closure plate to selectively close the opening of the lid when the agitator is activated.

In another preferred embodiment, the agitator includes a rotary shaft extending vertically through the lid and connected at its upper end to a motor. A crisscross mount is secured to the lower end of the rotary shaft. A plurality of agitating elements or bars extend substantially vertically downwardly from the mount.

In a preferred embodiment, a distributor unit is fitted in the opening of the lid to automatically distribute a separating agent over dross. Preferably, the distributor unit includes a distributor body within which the separating agent is contained, a distributor shaft extending vertically through the distributor body and connected at its upper end to a distributor motor, and a substantially circular distributor plate connected to the lower end of the distributor shaft. The circular distributor plate is located below the lid by such a distance as to prevent the separating agent from falling off of the distributor plate when the distributor motor is rendered inoperative.

The above and other objects, features and advantages of the present invention will be apparent from the following detailed description of the preferred embodiments of the invention, as illustrated in the accompanying drawings.
Fig. 1 is an exploded perspective view of a solder dross removal apparatus according to one embodiment of the present invention;
Fig. 2 is a side sectional view of the solder dross removal apparatus shown in Fig. 1;
Fig. 3 is an exploded perspective view of a solder dross removal apparatus according to another embodiment of the present invention;
Fig. 4 is a side sectional view of the solder dross removal apparatus shown in Fig. 3; and
Fig. 5 shows the manner in which a separating agent is automatically introduced by the use of a distributor unit.

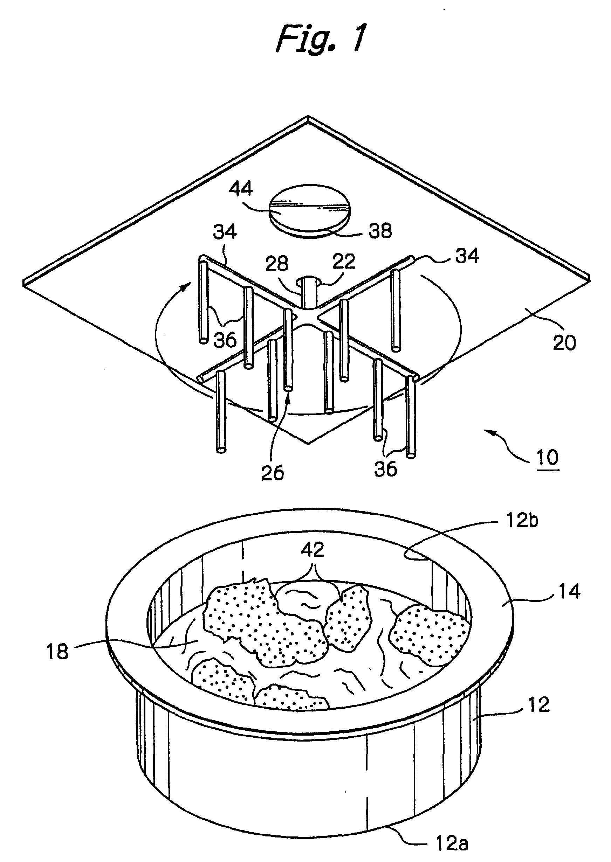

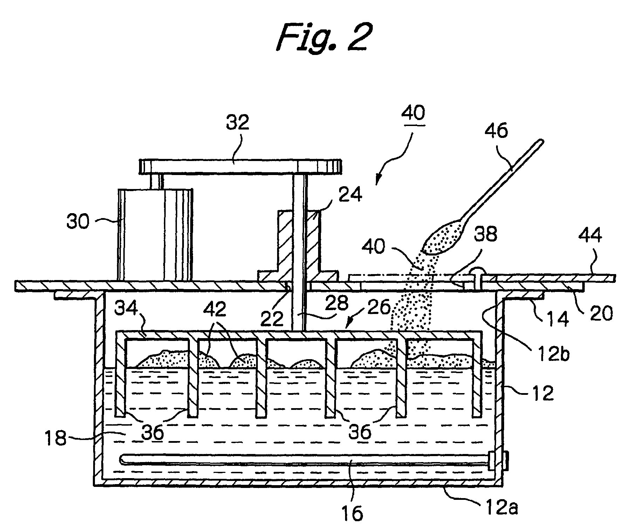

Referring now to Figs. 1 and 2, there is shown a solder dross removal apparatus assembled according to one embodiment of the present invention and generally indicated by reference numeral 10. Typically, the solder dross removal apparatus 10 is placed adjacent to a wave soldering machine (not shown). The solder dross removal apparatus 10 includes a cylindrical container 12 with a closed bottom and 12a an open top 12b. An annular flange 14 is formed in the open top 12b of the container 12. A heater assembly 16 is disposed in near the bottom of the container 12 to keep molten solder 18 at a preset temperature, for example, 250°C. A refractory lid 20 is mounted on the flange 14 of the container 12 and made, for example, of stainless steel. Alternatively, the lid 20 may be made of a heat-resistant glass and other transparent materials. Illustratively, the lid 20 has a rectangular shape. However, the lid 20 may take a round or any other shape. The lid 20 has a central aperture 22 through which an agitator shaft extends, as will be explained later. A vertical bearing sleeve 24 is placed centrally on the top of the lid 20 and communicated with the central aperture 22. An agitator 26 includes a rotary shaft 28 which extends through and is rotatably supported by the bearing sleeve 24. The rotary shaft 28 has an upper end connected to a motor 30 through a belt 32 and a lower end extending through the central aperture 22 of the lid 20. Illustratively, the motor 30 is placed on the top of the lid 20, but it may be mounted externally of the apparatus 10. A crisscross mount 34 is secured to the lower end of the rotary shaft 28. A plurality of agitating elements or rods 36 extend vertically from the crisscross mount 34. The lower end of the agitating elements 36 terminates sufficiently above the heater assembly 16. The lid 20 has a relatively large opening 38 through which a separating agent 40 is introduced into the container 12 to remove tin and other oxides from dross 42. A closure plate 44 is slidably mounted on the top of the lid 20 to selectively open and close the opening 38.

In use, a sufficient amount of molten solder 18 is first poured into the container 12. This molten solder 18 has the same components as that contained within a solder reservoir (not shown) of a wave soldering machine (not shown). The heater assembly 16 is actuated to keep the molten solder 18 at a temperature of approximately 250°C. In wave soldering, dross is always formed wherever molten solder is exposed to atmospheric air. In the present invention, the dross 42 is manually transported from the solder reservoir (not shown) to the container 12 by the use, for example, of a ladle or similar mean (not shown) while the dross is hot. The dross 40 remains on the surface of the molten solder 18 in the container 12. The lid 20 together with the agitator 26 is placed on the top of the container 12. The motor 30 is then energized to rotate the rotary shaft 28. This causes the agitating elements 36 to rotate about the rotary shaft 28. The closure plate 44 is then moved in such a direction as to open the opening 38. A spoon or similar means 46 is used to introduce the separating agent 40 into the container 12 through the opening 38. The separating agent 40 may be rice bran, offal, bean flour, sesame grain or flour, and other materials, such as disclosed by United States Patent No. 6,214,218. Thereafter, the closure plate 44 is moved toward the bearing sleeve 24 to close the opening 38. The agitating elements 36 continued to be rotated until oxides are separated. When the oxides have been separated, the motor 30 is deenergized to stop rotation of the agitating elements 36. After the lid 20 is removed from the top of the container 12, a ladle or similar means (not shown) is used to remove the oxides and carbide formed as a result of burning of the separating agent.

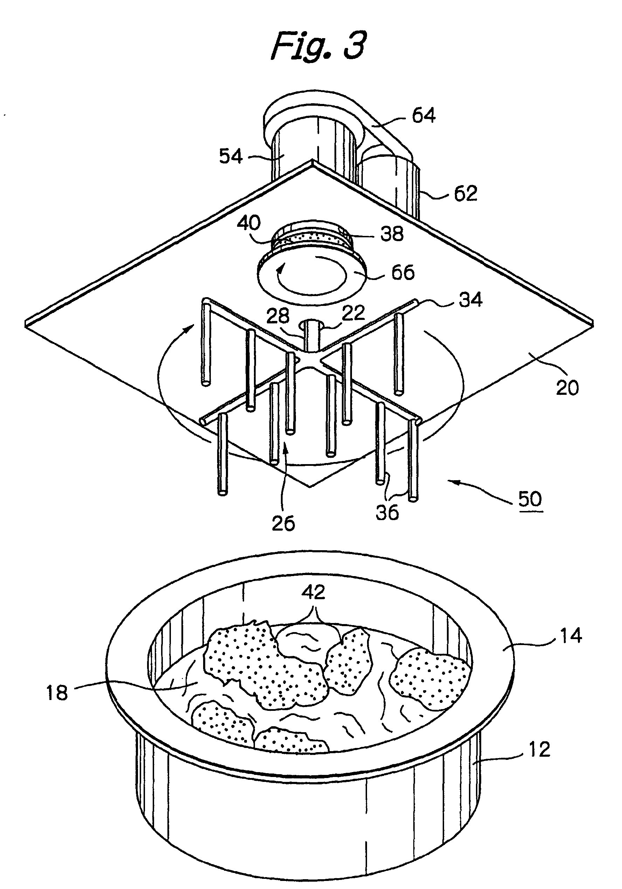

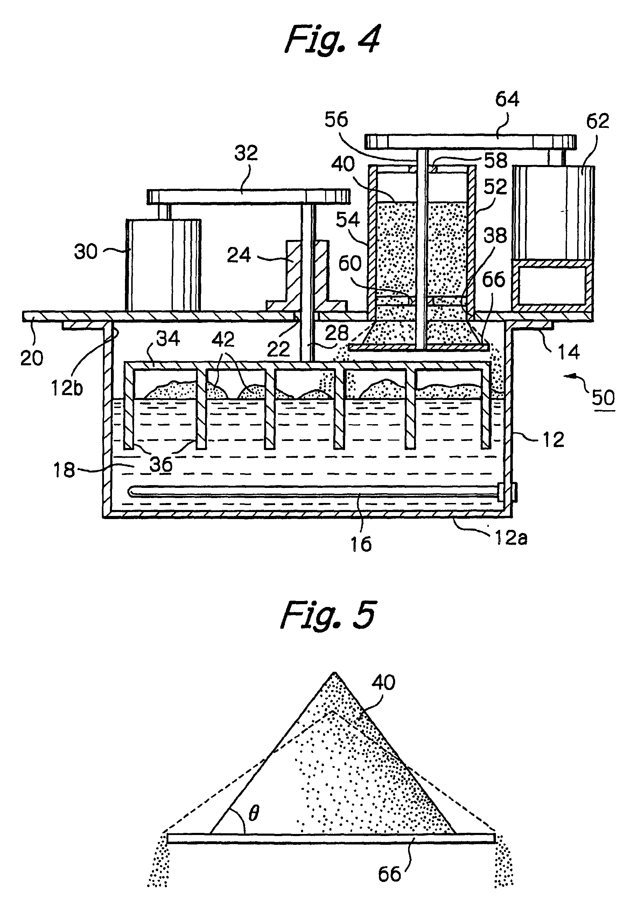

Referring next to Figs. 3 and 4, there is shown a solder dross removal apparatus assembled according to another embodiment of the present invention and generally indicated by reference numerals 50. Like elements are indicated by like reference numerals used in the embodiment shown in Figs. 1 and 2. In this embodiment, the solder dross removal apparatus 50 includes a distributor unit 52 for automatically introducing the separating agent 40 into the container 12. As better shown in Fig. 4, the distributor unit 52 includes a cylindrical distributor body 54 fitted in the opening 38 of the lid 20 and adapted to contain the separating agent 40. A vertical rotary shaft 56 extends axially through the distributor body and is rotatably supported by upper and lower bearing assemblies 58, 60. The rotary shaft 56 has an upper end connected to a distributor motor 62 through a belt 64 and a lower end connected to a circular distributor plate 66 on which the separating agent 40 rests. The distributor plate 66 has a diameter larger than that of the distributor body 54. The distributor plate 66 is located below the lid 20 by a distance so that the separating agent does not fall off of the distributor plate 66 by virtue of the angle of rest when the distributor motor 62 is rendered inoperative.

As in the previous embodiment, the molten solder 18 is first poured into the container 12. The heater assembly 16 is actuated to keep the molten solder 18 at a temperature of approximately 250°C. The dross 42 is transported from the solder reservoir (not shown) to the container 12. The lid 20 together with the agitator 26 and the distributor unit 52 is mounted on the flange 14 of the container 12. The separating agent 40 is fed into the distributor body 54 of the distributor unit 52. The separating agent 40 rest on the distributor plate 66 with the angle of rest as shown by solid line in Fig. 5. The motor 62 is energized to rotate the rotary shaft 56. As a result of this rotation, the angle of rest decreases as shown by broken line in Fig. 5. Then, the separating agent 40 gradually drops from the distributor plate 66 and is distributed over the dross 42 in the container 12. At the same time, the agitator motor 30 is energized to rotate the agitating elements 36 to promote separation of oxides from the dross.

While the particular preferred embodiments of the present invention have been shown and described, it will be obvious to those skilled in the art that various changes and modifications may be made without departing from the teachings of the invention.

## Claims

1. An apparatus for removing dross from molten solder, comprising:
a container (12) for holding a pool of molten solder (18) at a preset temperature and receiving dross (42), said container (12) having a closed bottom (12a) and an open top (12b);
a refractory lid (20) detachably mounted on the open top (12b) of said container (12) and shaped to substantially cover the open top of said container, said lid (20) including an opening (38) through which a separating agent (40) is introduced into said container (12) to facilitate separation of the dross (42); and
an agitator (26) rotatably supported by said lid (20) and located within said container (12) to agitate the molten solder and the dross.

2. The apparatus of claim 1, wherein said lid (20) is made of stainless steel.

3. The apparatus of claim 1, wherein said agitator (26) comprises a rotary shaft (28) extending through said lid (20) and having an upper end connected to a motor (30) and a lower end, a mount (34) connected to the lower end of said rotary shaft (28), and a plurality of agitating elements (36) extending vertically downwardly from said mount (34).

4. The apparatus of claim 3, wherein said mount (30) has a crisscross shape.

5. The apparatus of claim 1, wherein said lid (20) includes a closure member (44) adapted to selectively open and close said opening (38).

6. The apparatus of claim 1, further comprising a distributor unit (52) mounted in said opening (38) of said lid (20) for distributing the separating agent (40) over the dross (42) in said container (12).

7. The apparatus of claim 6, wherein said distributor unit (52) comprises a distributor body (54) within which the separating agent (40) is contained, a distributor shaft (56) extending through said distributor body (54) and having an upper end connected to a distributor motor (62) and a lower end, and a substantially circular distributor plate (66) connected to the lower end of said distributor shaft (56) and located below said lid (20) by such a distance as to prevent the separating agent from falling off of said distributor plate (66) when the distributor motor (62) is rendered inoperative.
